# EUROPEAN PATENT APPLICATION

(11) **EP 2 996 383 A1**
(43) Date of publication of application: **16.03.2016**
(21) Application number: 14795175.0
(22) Date of filing: 30.04.2014
(51) Int. Cl.: H04W 28/16, H04W 16/28, H04W 36/18

(54) **MOBILE COMMUNICATION METHOD AND WIRELESS BASE STATION**

(30) Priority: 09.05.2013 JP 2013099416
(71) Applicant: NTT DOCOMO, INC., Chiyoda-ku Tokyo 100-6150 (JP)
(72) Inventor: UCHINO, Tooru, Tokyo 100-6150 (JP); NAGATA, Satoshi, Tokyo 100-6150 (JP); TAKAHASHI, Hideaki, Tokyo 100-6150 (JP); HAPSARI, Wuri Andarmawanti, Tokyo 100-6150 (JP); TAKEDA, Kazuki, Tokyo 100-6150 (JP)
(74) Representative: Hoffmann Eitle
(86) International application number: PCT/JP2014/061939
(87) International publication number: WO 2014/181734

(57) **Abstract**

In a handover procedure between cells under different radio base stations (eNB), "RRC diversity" is implemented at the initiative of a network. A mobile communication method of the invention includes the steps of: causing a mobile station (UE) to transmit a "measurement report" to a radio base station (eNB #1); causing the radio base station (eNB #1) to transmit "CoMP preparation" to a radio base station (eNB #10) ; causing the radio base station (eNB #10) to transmit setting information on a cell (#10) to the radio base station (eNB #1) ; causing the radio base station (eNB #1) to conduct setting of the mobile station (UE) to perform CoMP transmission-reception; causing the mobile station (UE) to notify the radio base station (eNB #1) of radio quality in the cell (#10); and causing the radio base station (eNB #1) to instruct the mobile station (UE) to activate the CoMP transmission-reception.

## Description

### TECHNICAL FIELD

The present invention relates to a mobile communication method and a radio base station.

### BACKGROUND ART

In LTE (Long Term Evolution), when a mobile station UE in "RRC Connected state" moves across a cell boundary, a handover procedure is to take place in order to cause the mobile station UE to perform communication always by using an appropriate cell.

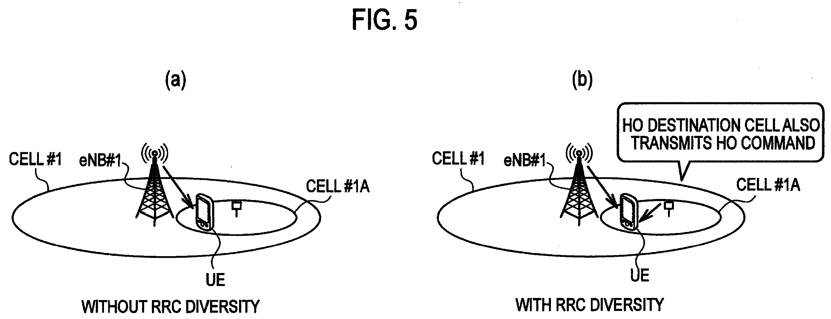

However, when the handover procedure takes place between cells using the same frequency, there is a concern that the mobile station UE cannot receive "HO command" from a handover source cell due to interference from a neighboring cell, and the handover procedure ends up in failure (see Fig. 5(a)).

Accordingly, as shown in Fig. 5(b), there has been proposed a control method (RRC diversity) for transmitting the "HO command" not only from the handover source cell but also from a handover destination cell in order to improve a probability of reception of the "HO command" by the mobile station UE, thus to suppress a failure in the handover procedure (see Non-patent Document 1).

Here, the "RRC diversity" can be implemented by CoMP transmission-reception (Coordinated Multi-Point transmission-reception) on a downlink.

Note that the CoMP transmission-reception on the downlink is a technique for improving throughput on the downlink by transmitting either the same or different data from multiple TPs (Transmission Points) to the mobile station UE.

### PRIOR ART DOCUMENT

### NON-PATENT DOCUMENT

Non-patent document 1: 3GPP Written Contributions R2-131211

### SUMMARY OF THE INVENTION

At present, the CoMP transmission-reception on the downlink can be carried out only in the cells under the same radio base station eNB.

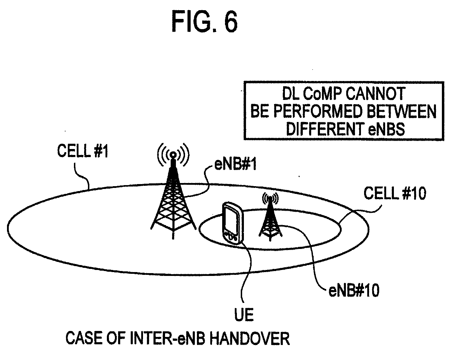

Accordingly, there is a problem that the "RRC diversity" cannot be implemented in a handover procedure between cells under different radio base stations eNB as shown in Fig. 6.

The present invention has been made in view of the aforementioned problem. An object of the present invention is to provide a mobile communication method and a radio base station which are capable of implementing "RRC diversity" at the initiative of a network in a handover procedure between cells under different radio base stations eNB.

A first feature of the present invention is summarized as a mobile communication method including: a step A of causing a mobile station, connected to a first cell under a first radio base station, to transmit to the first radio base station, a measurement report including information concerning a second cell under a second radio base station; a step B of causing the first radio base station to transmit a coordinated multi-point transmission-reception preparation signal to the second radio base station; a step C of causing the second radio base station to transmit setting information on the second cell to the first radio base station; a step D of causing the first radio base station to conduct setting of the mobile station to perform coordinated multi-point transmission-reception using the first radio base station and the second radio base station; a step E of causing the mobile station to notify the first radio base station of radio quality in the second cell; and a step F of causing the first radio base station, in response to the notification, to instruct the second radio base station to start scheduling for the mobile station and to instruct the mobile station to activate the coordinated multi-point transmission-reception.

A second feature of the present invention is summarized as a radio base station including: a reception unit; and a transmission unit. Here, the transmission unit is configured to transmit a coordinated multi-point transmission-reception preparation signal to a different radio base station, when the reception unit receives from a mobile station connected to a cell under the radio base station, a measurement report which includes information concerning a cell under the different radio base station, the transmission unit is configured to conduct setting of the mobile station to perform coordinated multi-point transmission-reception using the radio base station and the different radio base station, when the reception unit receives setting information on the cell under the different radio base station from the different radio base station, and the transmission unit is configured to instruct the different radio base station to start scheduling for the mobile station and to instruct the mobile station to activate the coordinated multi-point transmission-reception, when the reception unit receives radio quality in the cell under the different radio base station from the mobile station.

### BRIEF DESCRIPTION OF THE DRAWINGS

[Fig. 1] Fig. 1 is a view showing an overall configuration of a mobile communication system according to a first embodiment of the present invention.
[Fig. 2] Fig. 2 is a functional block diagram of a radio base station eNB #1 according to the first embodiment of the present invention.
[Fig. 3] Fig. 3 is a flowchart showing an operation of the mobile communication system according to the first embodiment of the present invention.
[Fig. 4] Fig. 4 is a view for explaining the operation of the mobile communication system according to the first embodiment of the present invention.
[Fig. 5] Fig. 5 (a) is a view for explaining the related art, and Fig. 5(b) is a view for explaining the related art.
[Fig. 6] Fig. 6 is a view for explaining the related art.

### MODE FOR CARRYING OUT THE INVENTION

### (Mobile Communication System According to First Embodiment of Present Invention)

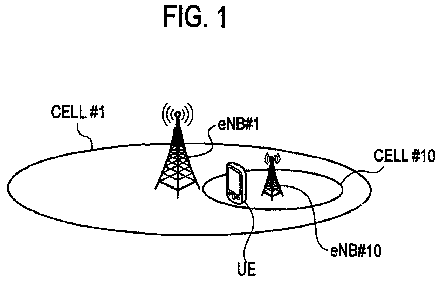

A mobile communication system according to a first embodiment of the present invention will be described with reference to Fig. 1 to Fig. 4.

As shown in Fig. 1, a mobile communication system of this embodiment includes a radio base station eNB #1 which manages a cell #1, and a radio base station eNB #10 which manages a cell #10.

An area covered by the cell #1 and an area covered by the cell #10 are designed to at least partially overlap each other geographically. Here, the cell #1 and the cell #10 are cells using the same frequency.

For example, the cell #1 may be a macro cell while the cell #10 may be a small cell such as a phantom cell.

Meanwhile, the mobile communication system of this embodiment is configured to be capable of carrying out CoMP on a downlink between the cell #1 under the radio base station eNB #1 and the cell #10 under the radio base station eNB #10 as well.

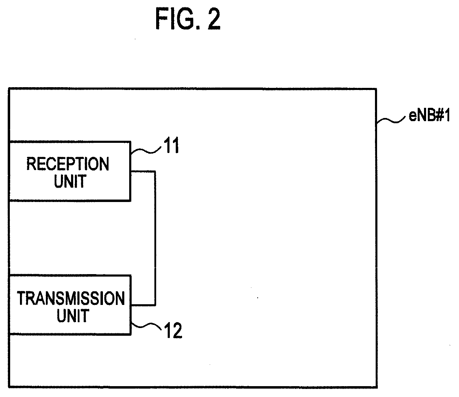

As shown in Fig. 2, the radio base station eNB #1 of this embodiment includes a reception unit 11 and a transmission unit 12.

The reception unit 11 is configured to receive various signals from a mobile station UE and the radio base station eNB #10. The transmission unit 12 is configured to transmit various signals to the mobile station UE and the radio base station eNB #10.

For example, the transmission unit 12 is configured, when the reception unit 11 receives a "measurement report" including information concerning the cell #10 from the mobile station UE connected to the cell #1 thereunder, to transmit "CoMP preparation" to the radio base station eNB #10.

Moreover, the transmission unit 12 is configured, when the reception unit 11 receives setting information (configuration) on the cell #10 from the radio base station eNB #10, to conduct setting of the mobile station UE to perform CoMP transmission-reception using the radio base station eNB #1 and the radio base station eNB #10.

Furthermore, the transmission unit 12 is configured, when the reception unit 11 receives radio quality in the cell #10 from the mobile station UE, to instruct the radio base station eNB #10 to start scheduling for the mobile station UE and to instruct the mobile station UE to activate the CoMP transmission-reception.

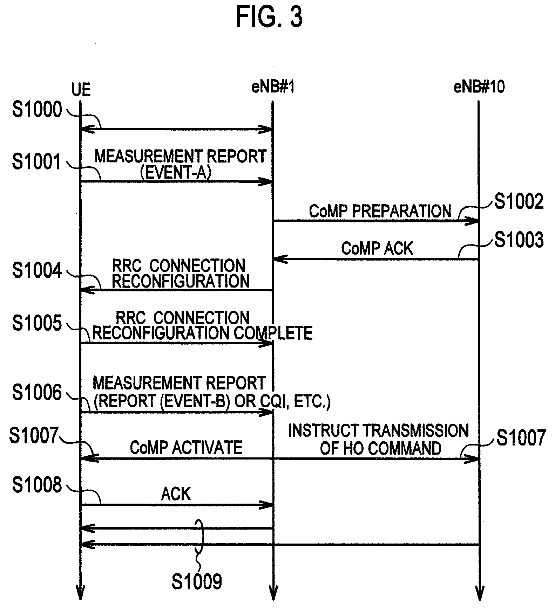

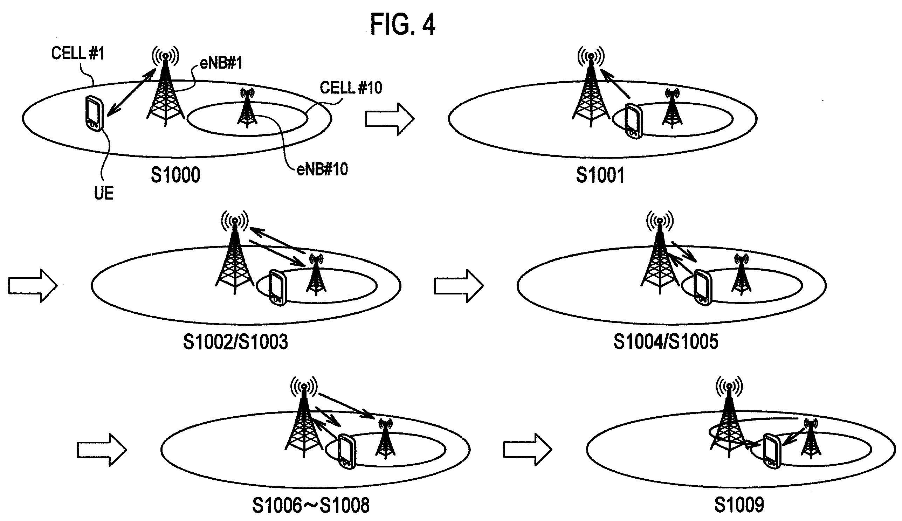

An operation of the mobile communication system of this embodiment will be described below with reference to Fig. 3 and Fig. 4. Specifically, a description will be given of a procedure of a handover of the mobile station UE from the cell #1 to the cell #10 in the mobile communication system of this embodiment.

As shown in Fig. 3 and Fig. 4, in step S1000, the mobile station UE establishes connection to the cell #1 under the radio base station eNB.

In step S1001, when the mobile station UE detects "Event-A" concerning the cell #10, the mobile station UE transmits to the radio base station eNB #1, the "measurement report" including the information concerning the cell #10.

In step S1002, the radio base station eNB #1 transmits the "CoMP preparation" to the radio base station eNB #10.

For example, the "CoMP preparation" includes identification information on the radio base station eNB #1, identification information on the mobile station UE, a measurement result included in the "measurement report," and the like.

Here, the identification information on the mobile station UE may be C-RNTI (Cell-Radio Network Temporary Identity) allocated by the radio base station eNB #1, or RNTI (such as D-RNTI) especially allocated by the radio base station eNB #1 for the purpose of the "RRC diversity."

In step S1003, the radio base station eNB #10 transmits to the radio base station eNB #1, "CoMP ACK" which contains setting information (configuration) on the cell #10.

For example, the "CoMP ACK" includes identification information on the radio base station eNB #10, the identification information on the mobile station UE, information on resources to be allocated to the mobile station UE, and the like.

Here, the identification information on the mobile station UE may be the C-RNTI allocated by the radio base station eNB #10, or RNTI (such as D-RNTI) especially allocated by the radio base station eNB #10 for the purpose of the "RRC diversity."

Meanwhile, the information on resources to be allocated to the mobile station UE may be information on allocation of E-PDCCH for transmitting a control signal for the "RRC diversity."

Note that when the radio base station eNB #10 cannot allocate the resources for the "RRC diversity" to the mobile station UE, the radio base station eNB #10 may transmit to the radio base station eNB #1, "CoMP NACK" instead of the "CoMP ACK. "

Here, the radio base station eNB #10 may notify of "cause" which shows a "resource shortage" by using the "CoMP NACK."

In step S1004, the radio base station eNB #1 transmits "RRC connection reconfiguration" to the mobile station UE in order to set the CoMP transmission-reception on the downlink by using the radio base station eNB #1 and the radio base station eNB #10.

In step S1005, the mobile station UE transmits "RRC connection reconfiguration complete" to the radio base station eNB #1.

In step S1006, when the mobile station UE detects "Event-B," the mobile station UE transmits to the radio base station eNB #1, a "measurement report" which notifies of the radio quality in the cell #10.

Alternatively, in step S1006, when the mobile station UE detects the "Event-B," the mobile station UE may notify the radio base station eNB #1 of the radio quality in the cell #10, by using CQI (Channel Quality Indicator) and the like.

In step S1007, in response to the notification of the radio quality in the cell #10, the radio base station eNB #1 instructs the radio base station eNB #10 to start the scheduling (transmission of the "HO command") for the mobile station UE, and instructs the mobile station UE to activate the CoMP transmission-reception.

For example, the radio base station eNB #1 instructs the mobile station UE to activate the CoMP transmission-reception by using MAC-CE (Media Access Control-Control Element) and the like.

The mobile station UE transmits "ACK" to the radio base station eNB #1 in step S1008, and attempts reception from multiple TPs, namely, from both the radio base station eNB #1 and the radio base station eNB #10 in step S1009.

Specifically, both the radio base station eNB #1 and the radio base station eNB #10 transmit the "HO command" to the mobile station UE, i.e., perform the "RRC diversity, " while the mobile station UE attempts reception of the "HO command" from both the radio base station eNB #1 and the radio base station eNB #10.

Thereafter, the above-described setting of the mobile station UE to perform the CoMP transmission-reception may be cancelled at the initiative of a network.

For example, the radio base station eNB #1 may cancel the setting of the mobile station UE to perform the CoMP transmission-reception in response to the "CoMP NACK" from the radio base station eNB #10. Here, when the radio base station eNB #10 detects a resource shortage and the like, the radio base station eNB #10 may autonomously transmit the "CoMP NACK" to the radio base station eNB #1.

The radio base station eNB #1 may cancel the setting of the mobile station UE to perform the CoMP transmission-reception in "RRC connection release procedure" between the radio base station eNB #1 and the mobile station UE.

The radio base station eNB #1 may cancel the setting of the mobile station UE to perform the CoMP transmission-reception depending on a movement state of the mobile station UE.

For example, the radio base station eNB may cancel the setting of the mobile station UE to perform the CoMP transmission-reception when the radio base station eNB detects a fact, on the basis of GPS information or the like on the mobile station UE, that a movement distance of the mobile station UE within a predetermined time period is smaller than a predetermined threshold or when the handover procedure does not take place after a lapse of a predetermined period after the setting of the CoMP transmission-reception is performed, for example.

Meanwhile, the above-described setting of the mobile station UE to perform the CoMP transmission-reception may be cancelled at the initiative of the mobile station UE.

For example, the mobile station UE may cancel the setting of the CoMP transmission-reception when the mobile station UE detects an RLF (Radio Link Failure) between the mobile station UE and the radio base station eNB #1 or the radio base station eNB #10.

The mobile station UE may cancel the setting of the CoMP transmission-reception in the case of transition from "RRC_Connected state" to "RRC_IDLE state."

The radio base station eNB #1 may cancel the setting of the mobile station UE to perform the CoMP transmission-reception in response to a cancellation request received from the mobile station UE.

Here, when the mobile station UE desires to cancel the setting of the CoMP transmission-reception, the mobile station UE can autonomously perform a cancellation request to the radio base station eNB #1.

For example, the mobile station UE may perform the above-mentioned cancellation request by notifying of "a desire to perform power saving" by use of "PPI (Power Preference Indicator)" defined in LTE Release-11.

The features of the present embodiment may also be expressed as follows.

A first feature of the present embodiment is summarized as a mobile communication method including: a step A of causing a mobile station UE, connected to a cell #1 (first cell) under a radio base station eNB#1 (first radio base station), to transmit to the radio base station eNB#1, a "measurement report" including information concerning a cell #10 (second cell) under a radio base station eNB#10 (second radio base station) ; a step B of causing the radio base station eNB#1 to transmit "CoMP preparation (coordinated multi-point transmission-reception preparation signal)" to the radio base station eNB#10; a step C of causing the radio base station eNB#10 to transmit setting information (configuration) on the cell #10 to the radio base station eNB#1; a step D of causing the radio base station eNB#1 to conduct setting of the mobile station UE to perform CoMP transmission-reception (coordinated multi-point transmission-reception) using the radio base station eNB#1 and the radio base station eNB#10; a step E of causing the mobile station UE to notify the radio base station eNB#1 of radio quality in the cell #10; and a step F of causing the radio base station eNB#1, in response to the notification, to instruct the radio base station eNB#10 to start scheduling for the mobile station UE and to instruct the mobile station UE to activate the CoMP transmission-reception.

According to the above-described aspect, the CoMP on the downlink can be carried out between the cell #1 under the radio base station eNB #1 and the cell #10 under the radio base station eNB #10. As a result, in the handover procedure between the cell #1 under the radio base station eNB #1 and the cell #10 under the radio base station eNB #10, it is possible to implement the "RRC diversity" at the initiative of the network.

In the first feature of the present embodiment, the "CoMP preparation" may include: identification information on the radio base station eNB#1; identification information on the mobile station UE; and a measurement result included in the "measurement report."

Accordingly to the above-described feature, the radio base station eNB #10 can acquire the information necessary for carrying out the CoMP on the downlink, i.e., for implementing the "RRC diversity."

In the first feature of the present embodiment, the radio base station eNB#10 may transmit the setting information on the cell #10 by using "CoMP ACK (coordinated multi-point transmission-reception acknowledgment signal) " in the step C, and the "CoMP ACK" may include: identification information on the radio base station eNB#10; identification information on the mobile station UE; and information on a resource to be allocated to the mobile station UE.

Accordingly to the above-described feature, the radio base station eNB #1 can acquire the information necessary for carrying out the CoMP on the downlink, i.e., for implementing the "RRC diversity."

In the first feature of the present embodiment, the mobile communication method further may include the step of: causing the radio base station eNB#1 to cancel the setting of the mobile station UE to perform the CoMP transmission-reception, in response to "CoMP NACK (coordinated multi-point transmission-reception non-acknowledgment signal)" from the radio base station eNB#10.

According to the above-described feature, the radio base station eNB #1 can appropriately cancel the setting of the mobile station UE to perform the CoMP transmission-reception when a resource shortage or the like occurs in the radio base station eNB #10.

In the first feature of the present embodiment, the mobile communication method further may include the step of: causing the radio base station eNB#1 to cancel the setting of the mobile station UE to perform the CoMP transmission-reception, in an RRC connection release procedure between the radio base station eNB#1 and the mobile station UE.

According to the above-described feature, it is possible to cancel the setting of the mobile station UE to perform the CoMP transmission-reception, which becomes unnecessary, at the timing to release the RRC connection between the radio base station eNB #1 and the mobile station UE.

In the first feature of the present embodiment, the mobile communication method further may include the step of: causing the radio base station eNB#1 to cancel the setting of the mobile station UE to perform the CoMP transmission-reception depending on a movement state of the mobile station UE.

According to the above-described feature, the radio base station eNB #1 can cancel the setting of the mobile station UE to perform the CoMP transmission-reception in a situation where the mobile station UE hardly moves and it is unlikely that the handover procedure takes place.

In the first feature of the present embodiment, the mobile communication method further may include the step of: causing the mobile station UE to cancel the setting of the CoMP transmission-reception when the mobile station UE detects an RLF (radio link failure) between the mobile station UE and the radio base station eNB#1 or the radio base station eNB#10.

According to the above-described feature, the mobile station UE can detect the RLF between the radio base station eNB #1 and the mobile station UE, and cancel the setting of the mobile station UE to perform the CoMP transmission-reception, which becomes unnecessary, at the timing to perform a reestablishment procedure.

In the first feature of the present embodiment, the mobile communication method further may include the step of: causing the mobile station UE to cancel the setting of the CoMP transmission-reception when the mobile station UE transitions to "RRC_IDLE state (idle state)."

According to the above-described feature, the mobile station UE can cancel the setting of the CoMP transmission-reception, which becomes unnecessary, at the timing of the transition to the "RRC_IDLE state."

In the first feature of the present embodiment, the mobile communication method further may include the step of: causing the radio base station eNB#1 to cancel the setting of the mobile station UE to perform the CoMP transmission-reception, in response to a cancellation request received from the mobile station UE.

According to the above-described feature, the mobile station UE can autonomously avoid battery consumption attributed to carrying out the CoMP transmission-reception on the downlink.

A second feature of the present embodiment is summarized as a radio base station eNB#1 including: a reception unit 11; and a transmission unit 12. Here, the transmission unit 12 is configured to transmit "CoMP preparation" to a radio base station eNB#10 (different radio base station), when the reception unit 11 receives from a mobile station UE connected to a cell #1 under the radio base station eNB#1, a "measurement report" which includes information concerning a cell #10 under the radio base station eNB#10, the transmission unit 12 is configured to conduct setting of the mobile station UE to perform CoMP transmission-reception using the radio base station eNB#1 and the radio base station eNB#10, when the reception unit 11 receives setting information on the cell #10 from the radio base station eNB#10, and the transmission unit 12 is configured to instruct the radio base station eNB#10 to start scheduling for the mobile station UE and to instruct the mobile station UE to activate the CoMP transmission-reception, when the reception unit 11 receives radio quality in the cell #10 from the mobile station UE.

According to the above-described aspect, the CoMP on the downlink can be carried out between the cell #1 under the radio base station eNB #1 and the cell #10 under the radio base station eNB #10. As a result, in the handover procedure between the cell #1 under the radio base station eNB #1 and the cell #10 under the radio base station eNB #10, it is possible to implement the "RRC diversity" at the initiative of the network.

It should be noted that the foregoing operations of the mobile station UE and the radio base stations eNB#1 and eNB#10 may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile station UE and the radio base stations eNB#1 and eNB#10. Otherwise, the storage medium and the processor may be provided as discrete components inside the mobile station UE and the radio base stations eNB#1 and eNB#10.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire content of Japanese Patent Application No. 2013-099416 (filed on May 9, 2013) is incorporated by reference in the present specification.

### INDUSTRIAL APPLICABILITY

As described above, according to the present invention, it is possible to provide a mobile communication method and a radio base station, which are capable of implementing "RRC diversity" at the initiative of a network in a handover procedure between cells under different radio base stations eNB.

### EXPLANATION OF THE REFERENCE NUMERALS

- eNB #1/eNB #10: radio base station

- UE: mobile station

- 11: reception unit
- 12: transmission unit

## Claims

1. A mobile communication method comprising:
a step A of causing a mobile station, connected to a first cell under a first radio base station, to transmit to the first radio base station, a measurement report including information concerning a second cell under a second radio base station;
a step B of causing the first radio base station to transmit a coordinated multi-point transmission-reception preparation signal to the second radio base station;
a step C of causing the second radio base station to transmit setting information on the second cell to the first radio base station;
a step D of causing the first radio base station to conduct setting of the mobile station to perform coordinated multi-point transmission-reception using the first radio base station and the second radio base station;
a step E of causing the mobile station to notify the first radio base station of radio quality in the second cell; and
a step F of causing the first radio base station, in response to the notification, to instruct the second radio base station to start scheduling for the mobile station and to instruct the mobile station to activate the coordinated multi-point transmission-reception.

2. The mobile communication method according to claim 1, wherein the coordinated multi-point transmission-reception preparation signal includes:
identification information on the first radio base station;
identification information on the mobile station; and
a measurement result included in the measurement report.

3. The mobile communication method according to claim 1 or 2, wherein
the second radio base station transmits the setting information on the second cell by using a coordinated multi-point transmission-reception acknowledgment signal in the step C, and
the coordinated multi-point transmission-reception acknowledgment signal includes:
identification information on the second radio base station;
identification information on the mobile station; and
information on a resource to be allocated to the mobile station.

4. The mobile communication method according to any one of claims 1 to 3, further comprising the step of:
causing the first radio base station to cancel the setting of the mobile station to perform the coordinated multi-point transmission-reception, in response to a coordinated multi-point transmission-reception non-acknowledgment signal from the second radio base station.

5. The mobile communication method according to any one of claims 1 to 3, further comprising the step of:
causing the first radio base station to cancel the setting of the mobile station to perform the coordinated multi-point transmission-reception, in an RRC connection release procedure between the first radio base station and the mobile station.

6. The mobile communication method according to any one of claims 1 to 3, further comprising the step of:
causing the first radio base station to cancel the setting of the mobile station to perform the coordinated multi-point transmission-reception depending on a movement state of the mobile station.

7. The mobile communication method according to any one of claims 1 to 3, further comprising the step of:
causing the mobile station to cancel the setting of the coordinated multi-point transmission-reception when the mobile station detects a radio link failure between the mobile station and the first radio base station or the second radio base station.

8. The mobile communication method according to any one of claims 1 to 3, further comprising the step of:
causing the mobile station to cancel the setting of the coordinated multi-point transmission-reception when the mobile station transitions to an idle state.

9. The mobile communication method according to any one of claims 1 to 3, further comprising the step of:
causing the first radio base station to cancel the setting of the mobile station to perform the coordinated multi-point transmission-reception, in response to a cancellation request received from the mobile station.

10. A radio base station comprising:
a reception unit; and
a transmission unit, wherein
the transmission unit is configured to transmit a coordinated multi-point transmission-reception preparation signal to a different radio base station, when the reception unit receives from a mobile station connected to a cell under the radio base station, a measurement report which includes information concerning a cell under the different radio base station,
the transmission unit is configured to conduct setting of the mobile station to perform coordinated multi-point transmission-reception using the radio base station and the different radio base station, when the reception unit receives setting information on the cell under the different radio base station from the different radio base station, and
the transmission unit is configured to instruct the different radio base station to start scheduling for the mobile station and to instruct the mobile station to activate the coordinated multi-point transmission-reception, when the reception unit receives radio quality in the cell under the different radio base station from the mobile station.
